# EUROPÄISCHE PATENTANMELDUNG

(11) **EP 1 167 789 A1**
(43) Veröffentlichungstag der Anmeldung: **02.01.2002**
(21) Anmeldenummer: 01104009.4
(22) Anmeldetag: 20.02.2001
(51) Int. Cl.: F16C 27/06

(54) **Zentrierhülse**

(30) Priorität: 29.06.2000 DE 10031589
(71) Anmelder: Firma Carl Freudenberg, 69469 Weinheim (DE)
(72) Erfinder: Jäger, Kurt, 69469 Weinheim (DE)

(57) **Zusammenfassung**

Zentrierhülse, umfassend ein Außenbuchse (1), die eine Innenbuchse (2) mit radialem Abstand umschließt, wobei in dem durch den Abstand gebildeten Spalt (3) ein Federkörper (4) aus elastomerem Werkstoff angeordnet ist und wobei die Innenbuchse (2) zumindest eine radial nach innen offene Schmiermitteltasche (5) aufweist.

## Beschreibung

### Beschreibung

Die Erfindung betrifft eine Zentrierhülse.

### Stand der Technik

Zentrierhülsen sind allgemein bekannt, beispielsweise aus der DE 196 09 773 C1. Die vorbekannte Zentrierhülse umfasst eine Außenbuchse aus zähhartem Werkstoff, die einen Federkörper aus elastomerem Werkstoff außenseitig umschließt und stoffschlüssig mit diesem verbunden ist. Der Federkörper ist als Führungsring ausgebildet und berührt die zu zentrierenden Maschinenelemente unmittelbar anliegend.

### Darstellung der Erfindung

Der Erfindung liegt die Aufgabe zugrunde, eine Zentrierhülse der eingangs genannten derart weiterzuentwickeln, daß abrasiver Verschleiß auch bei Extrembeanspruchung der Zentrierhülse reduziert wird.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist ein Zentrierhülse vorgesehen, umfassend ein Außenbuchse, die eine Innenbuchse mit radialem Abstand umschließt, wobei in dem durch den Abstand gebildeten Spalt ein Federkörper aus elastomerem Werkstoff angeordnet ist und wobei die Innenbuchse zumindest eine radial nach innen offene Schmiermitteltasche aufweist. Die Innenbuchse besteht aus einem zähharten Werkstoff, beispielsweise aus einem Buntmetall, der gute Notlaufeigenschaften aufweist. Die Schmiermitteltasche ist während der bestimmungsgemäßen Verwendung der Zentrierhülse mit einem Schmiermittel, beispielsweise einem Schmierfett gefüllt. Die Reibung zwischen dem zu zentrierenden Maschinenelement und der Zentrierhülse bei Relativbewegungen der Teile zueinander ist vernachlässigbar gering. Abrasiver Verschleiß auf den einander zugewandten Oberflächen von Innenbuchse und Maschinenelement ist dadurch während einer langen Gebrauchsdauer im wesentlichen ausgeschlossen. Die Zentrierhülse ist derart gestaltet, daß Schwenkbewegungen mit kleinen Schwenkwinkeln, kleine translatorische Bewegungen und Winkelverdrehungen der miteinander zentrierten Maschinenelemente relativ zueinander ausgeführt werden können.

Die Schmiermitteltasche beispielsweise kann durch ein sich in Umfangsrichtung erstreckende, in sich geschlossene Nut gebildet sein. Hierbei ist von Vorteil, daß die Kontaktflächen von Innenbuchse zu zentrierendem Maschinenelement auch dann gut geschmiert sind, wenn sich die beiden Teile nur um einen sehr kleinen Betrag in axialer Richtung relativ translatorisch zueinander bewegen. Bedarfsweise können auch mehrere, sich in Umfangsrichtung erstreckende, in sich geschlossene Nuten vorgesehen sein, die einander mit axialem Abstand benachbart zugeordnet sind.

Um auch bei Verdrehungen der Innenbuchse relativ zum zu zentrierenden Maschinenelement stets eine gute Schmierung der einander berührenden Oberflächen zu erreichen, kann die Schmiermitteltasche beispielsweise durch sich X-förmig durchschneidende Nuten gebildet sein. Unabhängig von der Richtung der Relativbewegung von Innenbuchse und zu zentrierendem Maschinenelement zueinander, ist durch eine solche Gestalt der Schmiermitteltasche stets eine optimale Schmierung mit geringst möglichem Verschleiß der einander berührenden Oberflächen sichergestellt.

Die Innenbuchse kann auf der der Schmiermitteltasche radial abgewandten Seite einen wulstförmigen, umfangsseitig umlaufenden Steg aufweisen, wobei der Steg zumindest eine sich in axialer Richtung erstreckende Durchbrechung aufweist, die vom elastomerem Werkstoff des Federkörpers durchdrungen ist. Eine solche Zentrierhülse weist eine hohe radiale Steifigkeit auf und erlaubt gleichzeitig große kardanische Auslenkbewegungen von Außenbuchse und Innenbuchse zueinander. Die hohe radiale Steifigkeit wird dadurch erreicht, daß - im Längsschnitt betrachtet - die radiale Dicke des Federkörpers im Bereich des Stegs nur vergleichsweise gering im Vergleich zur Dicke des Federkörpers in den axial daran angrenzenden Bereichen ist. Die großen kardanischen Auslenkbewegungen der Innenbuchse bezogen auf die Außenbuchse sind durch die - im Vergleich zum Außenumfang des Stegs - radial nach innen versetzten Randbereiche axial beiderseits des Stegs und dem daraus resultierend größeren radialen Abstand zum Innenumfang der Außenbuchse zu erreichen. Eine hohe radiale Steifigkeit hat den Vorteil, daß die Zentrierung der Kardanwelle zum Getriebe gewährleistet ist und dass sich die Unwucht der Kardanwelle im zulässigen Toleranzbereich hält.

Um eine einfache und dadurch kostengünstige Herstellbarkeit der Zentrierhülse zu gewährleisten, ist zumindest eine sich in axialer Richtung durch den Steg erstreckende Durchbrechung vorgesehen. Der elastomere Werkstoff des Federkörpers strömt während der Herstellung der Zentrierhülse nicht nur durch den in radialer Richtung kleinen Spalt zwischen dem Außenumfang des Stegs und dem Innenumfang der Außenbuchse, sondern zunächst durch die Durchbrechung. Durch die Durchbrechungen ist das axiale Fließen des noch pastösen Federkörper-Werkstoffs in axialer Richtung kaum behindert, so daß sich eine gute und dauerhaltbare Verbindung zwischen Außenbuchse und Innenbuchse ergibt.

Eine verbesserte Herstellbarkeit der Zentrierhülse kann dadurch erreicht werden, daß mehrere, bevorzugt zumindest drei, besser sechs gleichmäßig in Umfangsrichtung verteilte Durchbrechungen innerhalb des Stegs angeordnet sind.

Eine weiter verbesserte Verteilung des pastösen, elastomeren Werkstoffs während der Herstellung der Zentrierhülse innerhalb des radialen Spalts zwischen dem Steg und dem Innenumfang der Außenbuchse kann dadurch erleichtert werden, daß die Durchbrechungen radial nach außen offen sind, so daß der Steg in Umfangsrichtung im wesentlichen zahnradförmig ausgebildet ist. Die Durchbrechungen sind dann in Umfangsrichtung durch sich radial nach außen erstreckende Erhöhungen begrenzt, wobei die Außenbuchse auch die Erhöhungen mit radialem Abstand umschließt und wobei der durch den Abstand gebildete Spalt vom elastomeren Werkstoff des Federkörpers ausgefüllt ist.

Im Hinblick auf eine einfache Herstellbarkeit der Zentrierhülse hat es sich als vorteilhaft bewährt, wenn die Innenbuchse entlang ihrer gesamten axialen Erstreckung eine, im Längsschnitt betrachtet, im wesentlichen übereinstimmende Dicke aufweist. Sowohl für die Herstellung der Innenbuchse selbst, als auch für die Herstellung der gesamten Zentrierhülse ist eine solche Ausgestaltung von Vorteil. Durch die übereinstimmende Materialstärke entlang der axialen Erstreckung ist die Gefahr der Bildung Lunkern - für den Fall, daß die Innenbuchse gegossen wird - durch die gleichmäßige Abkühlung des Bauteils im Anschluss an seine Herstellung auf ein Minimum reduziert. Ein übereinstimmende Dicke bedingt außerdem durch eine übereinstimmende Wärmeleitfähigkeit entlang der gesamten axialen Erstreckung und dadurch eine gleichmäßige Abkühlung des elastomeren Werkstoffs des Federkörpers im Anschluss an seine Vulkanisation. Die Spannungsverteilung innerhalb des elastomeren Werkstoffs nach seiner Abkühlung ist dann in allen Teilbereichen im wesentlichen übereinstimmend, wodurch gleichbleibend gute Gebrauchseigenschaften während einer langen Gebrauchsdauer sichergestellt sind.

Der Federkörper weist bevorzugt eine Härte Shore A von 60 ± 10 auf.

Das Verhältnis zwischen der radialen Dicke des Federkörpers im Bereich des Stegs und der Dicke des Federkörpers in den axial daran angrenzenden Bereichen beträgt bevorzugt 0,1 bis 0,3, um eine hohe radiale Steifigkeit und gleichzeitig eine große kardanische Auslenkbarkeit der Innenbuchse bezogen auf die Außenbuchse zu ermöglichen.

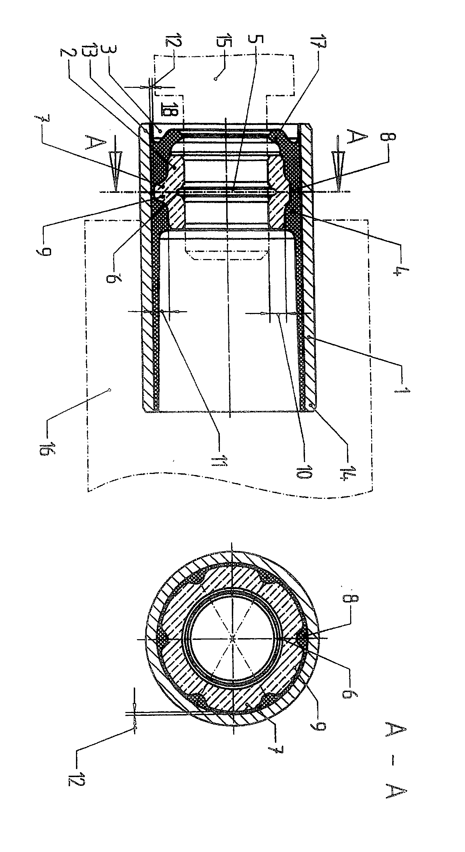

### Kurzbeschreibung der Zeichnung

Ein Ausführungsbeispiel der erfindungsgemäßen Zentrierhülse wird nachfolgend anhand der Figuren näher erläutert.

Diese zeigen jeweils in schematischer Darstellung:
einen Längsschnitt der Zentrierhülse und
einen Querschnitt durch die Zentrierhülse entlang der Linie A-A.

### Ausführung der Erfindung

In der Figur ist ein Ausführungsbeispiel einer erfindungsgemäßen Zentrierhülse in längsgeschnittener Darstellung gezeigt. Die Zentrierhülse besteht im wesentlichen aus der Außenbuchse 1, die die Innenbuchse 2 mit radialem Abstand umschließt. In dem durch den Abstand gebildeten Spalt 3 ist der Federkörper 4 angeordnet, der in diesem Ausführungsbeispiel aus einem elastomeren Werkstoff mit einer Härte Shore A 60 besteht.

Die Außenbuchse 1 besteht aus einem metallischen Werkstoff. Generell besteht jedoch auch die Möglichkeit, daß die Außenbuchse zum Beispiel aus einem zähharten polymeren Werkstoff besteht. Die Innenbuchse 2 besteht aus einem Gleichlager-Werkstoff, beispielsweise einer Legierung aus Kupfer und Zink oder Kupfer und Zinn.

Die Schmiermitteltasche 5 ist in diesem Ausführungsbeispiel durch eine in Umfangsrichtung der Zentrierhülse in sich geschlossene Nut 6 gebildet, die während der bestimmungsgemäßen Verwendung der Zentrierhülse mit einem Schmierfett gefüllt ist.

Die Zentrierhülse verbindet die Maschinenelemente 15, 16, die mit gestrichelten Linien dargestellt sind, miteinander. Von der Stirnseite 13 der Zentrierhülse wird das Maschinenelement 15 umschlossen, wobei das Maschinenelement 15 als Wellenende ausgebildet ist. Das Maschinenelement 16 umschließt die Außenbuchse 1 außenumfangsseitig. Die beiden Maschinenelemente 15, 16 sind einander relativ winkelbeweglich zugeordnet. Außerdem sind die Maschinenelemente 15, 16 in Umfangsrichtung und translatorisch zueinander beweglich durch die Zentrierhülse aufgenommen.

Das zweite Maschinenelement 16 umschließt die Zentrierhülse kraftschlüssig. Das erste Maschinenelement 15 wird von der Innenbuchse 2 außenumfangsseitig anliegend berührt, wobei der Innenbuchse 2 auf der der Umgebung 18 zugewandten Seite eine Dichtlippe 17 mit axialem Abstand benachbart zugeordnet ist. Die Dichtlippe 17 umschließt das erste Maschinenelement 15 unter radialer Vorspannung dichtend und verhindert das Eindringen von Verunreinigungen ins Innere der Zentrierhülse.

In diesem Ausführungsbeispiel weist der wulstförmige Steg 7 sechs Durchbrechungen 8 auf, die gleichmäßig in Umfangsrichtung verteilt angeordnet sind. Die Durchbrechungen 8 sind radial nach außen offen, wie im Querschnitt gezeigt, so dass sich der elastomere Werkstoff während der Herstellung der Zentrierhülse auf dem gesamten Innenumfang der Außenbuchse 1 verteilt.

Das Verhältnis zwischen der radialen Dicke 11 des Federkörpers 4 im Bereich des Stegs 7 und der Dicke 12 des Federkörpers 4 in den axial daran angrenzenden Bereichen beträgt hier 0,2. Dadurch ist eine ausgezeichnete kardanische Beweglichkeit der beiden Maschinenelemente 15, 16 zueinander gewährleistet.

Die Innenbuchse 2 weist entlang ihrer gesamten axialen Erstreckung eine im wesentlichen übereinstimmende Dicke 10 auf.

Im Querschnitt ist die längsgeschnittene Zentrierhülse entlang der Linie A-A gezeigt. Die sechs Durchbrechungen 8 sind gleichmäßig in Umfangsrichtung verteilt, wobei die Herstellung hinsichtlich der Vulkanisation des Federkörpers 4 umso einfacher ist, je größer die Anzahl der Durchbrechungen 8 ist.

## Patentansprüche

1. Zentrierhülse, umfassend ein Außenbuchse (1), die eine Innenbuchse (2) mit radialem Abstand umschließt, wobei in dem durch den Abstand gebildeten Spalt (3) ein Federkörper (4) aus elastomerem Werkstoff angeordnet ist und wobei die Innenbuchse (2) zumindest eine radial nach innen offene Schmiermitteltasche (5) aufweist.

2. Zentrierhülse nach Anspruch 1, **dadurch gekennzeichnet, daß** die Schmiermitteltasche (5) durch eine sich in Umfangsrichtung erstreckende, in sich geschlossene Nut (6) gebildet ist.

3. Zentrierhülse nach einem der Ansprüche 1 oder 2, **dadurch gekennzeichnet, daß** die Innenbuchse (2) auf der der Schmiermitteltasche (5) radial abgewandten Seite einen wulstförmigen, umfangsseitig umlaufenden Steg (7) aufweist und daß der Steg (7) zumindest eine sich in axialer Richtung erstreckende Durchbrechung (8) aufweist, die vom elastomeren Werkstoff des Federkörper (4) durchdrungen ist.

4. Zentrierhülse nach Anspruch 3, **dadurch gekennzeichnet, daß** die Innenbuchse (2) zumindest drei gleichmäßig in Umfangsrichtung verteilte Durchbrechungen (8) aufweist.

5. Zentrierhülse nach einem der Ansprüche 3 oder 4, **dadurch gekennzeichnet, daß** die Innenbuchse (2) sechs gleichmäßig in Umfangsrichtung verteilte Durchbrechungen (8) aufweist.

6. Zentrierhülse nach einem der Ansprüche 3 bis 5, **dadurch gekennzeichnet, daß** die Durchbrechungen (8) radial nach außen offen sind.

7. Zentrierhülse nach einem der Ansprüche 3 bis 6, **dadurch gekennzeichnet, daß** die Durchbrechungen (8) in Umfangsrichtung durch sich radial nach außen erstreckende Erhöhungen (9) begrenzt sind, daß die Außenbuchse (1) die Erhöhungen (9) mit radialem Abstand umschließt und daß in dem durch den Abstand gebildeten Spalt (3) elastomerer Werkstoff des Federkörpers (4) angeordnet ist.

8. Zentrierhülse nach einem der Ansprüche 1 bis 7, **dadurch gekennzeichnet, daß** die Innenbuchse (2) entlang ihrer gesamten axialen Erstreckung eine, im Längsschnitt betrachtet, im wesentlichen überstimmende Dicke (10) aufweist.

9. Zentrierhülse nach einem der Ansprüche 1 bis 8, **dadurch gekennzeichnet, daß** die Innenbuchse (2) aus einem Buntmetall besteht.

10. Zentrierhülse nach einem der Ansprüche 1 bis 9, **dadurch gekennzeichnet, daß** das Verhältnis zwischen der radialen Dicke (11) des Federkörpers (4) im Bereich des Stegs (7) und der radialen Dicke (12) des Federkörpers (4) in den axial daran angrenzenden Bereichen 0,1 bis 0,3 beträgt.
